(19) Europäisches Patentamt
European Patent Office
Office européen des brevets

(11) **EP 4 665 006 A1**

(12) **EUROPEAN PATENT APPLICATION**
published in accordance with Art. 153(4) EPC

(43) Date of publication:
**17.12.2025 Bulletin 2025/51**

(21) Application number: **24753344.1**

(22) Date of filing: **06.02.2024**

(51) International Patent Classification (IPC):
**H04W 52/02** *(2009.01)*     **H04W 88/08** *(2009.01)*
**H04W 92/04** *(2009.01)*

(52) Cooperative Patent Classification (CPC):
**H04W 52/02; H04W 88/08; H04W 92/04**

(86) International application number:
**PCT/JP2024/003851**

(87) International publication number:
**WO 2024/166901 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.02.2023 JP 2023019066**

(71) Applicant: **NEC Corporation
108-8001 Tokyo (JP)**

(72) Inventor: **HISHI Ukyo
Tokyo 108-8001 (JP)**

(74) Representative: **Mathys & Squire
The Shard
32 London Bridge Street
London SE1 9SG (GB)**

(54) **RU DEVICE, CONTROL DEVICE, COMMUNICATION SYSTEM, METHOD, AND PROGRAM**

(57)     The purpose of the present invention is to provide a radio unit (RU) device capable of achieving power saving. The RU device according to the present disclosure comprises: a management unit that acquires first information relating to a correspondence between a physical component and a logic component in a fronthaul; and a communication unit that transmits the first information to a control device that controls the RU device.

Fig. 1

**Description**

Technical Field

The present disclosure relates to an RU device, a control device, a communication system, a method, and a program.

Background Art

In recent years, a radio access network has been used in which a baseband unit and a radio unit of a base station are separated and the baseband unit and the radio unit are connected via a fronthaul. An open-radio access network (O-RAN) fronthaul specification defined by the O-RAN alliance defines specifications of a fronthaul between an O-RU (radio unit) corresponding to the radio unit, and an O-DU (distributed unit) and an O-CU (central unit) corresponding to the baseband unit. One object of the O-RAN fronthaul specification is to facilitate connection with an O-RU of a vendor different from a vendor of an O-DU, and to enable multi-vendor of a radio access network.

In the O-RAN fronthaul, specifications related to a control (C)-plane, a user (U)-plane, a synchronization (S)-plane, and an M-plane are defined. Here, NPL 1 mainly defines specifications related to a management-plane (M-Plane) in an O-RAN fronthaul. An outline of functions related to the M-Plane disclosed in NPL 1 will be described below.

The M-Plane provides a management function for the O-RU. Specifically, in the M-Plane, an O-DU, a service management and orchestration (SMO), or a network management system (NMS) is defined as a network device that manages an O-RU. Furthermore, in the M-Plane, a network configuration protocol (NETCONF), which is a protocol generally used in management of network devices, is defined. In NETCONF, a network device that manages an O-RU corresponds to a NETCONF client, and an O-RU as a management target corresponds to a NETCONF server.

Here, the M-Plane has a configuration management function. Specifically, the NETCONF client such as the O-DU retrieves, from the O-RU, the state of the apparatus, the functions on NETCONF with which the O-RU is compatible, and the like. Further, the NETCONF client sets a parameter to the O-RU. NETCONF defines edit-config for setting parameters and get-config for retrieving parameter values. The NETCONF client can modify the state of an apparatus (hardware) of the O-RU that can be set or changed, by using edit-config. Examples of the hardware state that can be set include a power state. By modifying the power state, it is possible to achieve energy saving in the O-RU. Specifically, the NETCONF client causes the O-RU to transition to a state of awake or sleeping.

The state of awake is a state (normal mode) in which the O-RU performs a normal operation instead of an energy saving mode. On the other hand, the state of sleeping is a state in which the O-RU operates in the energy saving mode. In the state of sleeping, only the function related to the M-Plane can be operated, and the function related to the C/U/S-Plane can be stopped in order to suppress power consumption (see, for example, Section 9.1.3 of NPL 1). For example, in the energy saving mode, the operation of some antennas among the plurality of antennas provided in the O-RU may be stopped.

In addition, NPL 1 discloses that the NETCONF client assigns an extended antenna-carrier identifier (eAxC_ID). The eAxC ID is used for a C-Plane or U-Plane application to manage enhanced common public radio interface (eCPRI) communication between the O-DU and the O-RU in the C-Plane or the U-Plane. In addition, the eAxC_ID may be used to identify a data layer transmitted between the O-RU and the O-DU.

NPL 2 discloses a hardware configuration related to the O-RU and the O-DU. Specifically, the O-RU includes a plurality of digital processing units (DPUs) which are physical components. Each DPU is associated with a logical component for executing processing related to the data layer.

Citation List

Non Patent Literature

NPL 1: O-RAN-WG4.MP.0-v10.00, O-RAN Working Group 4 (Open Fronthaul Interfaces WG) Management Plane Specification
NPL 2: O-RAN.WG.7.0MAC-HAR.0-v03.00, O-RAN White Box Hardware Working Group Outdoor Macrocell Hardware Architecture and Requirements (FR1) Specification

Summary of Invention

Technical Problem

The DPU performs processing related to the data layer in the associated logical component. Here, the O-DU can reduce a data layer to be processed in the O-RU so as to achieve energy saving of the O-RU. However, even if the O-DU reduces the data layer, if at least one physical component in the O-RU that executes processing related to a plurality of data layers continues to operate so as to execute processing related to the data layer, there is a problem that the effect of energy saving of the O-RU is small. That is, even if the total number of data layers on which the O-RU performs processing is reduced, if the number of physical components to be operated cannot be reduced, there is a problem that the effect of energy saving of the O-RU is small.

In view of the above-described problems, an object of the present disclosure is to provide an RU device, a control device, and a method capable of achieving energy saving of the RU device.

Solution to Problem

A radio unit (RU) device according to a first aspect of the present disclosure includes means for acquiring first information on a correspondence relationship between a physical component and a logical component in a fronthaul, and means for transmitting the first information to a control device configured to control the RU device.

A control device according to a second aspect of the present disclosure includes means for receiving, from a radio unit (RU) device, first information on a correspondence relationship between a physical component in the RU device and a logical component in a fronthaul, and means for performing energy saving control of the RU device by using the first information.

A communication system according to a third aspect of the present disclosure includes a radio unit (RU) device and a control device configured to control the RU device. The RU device includes means for acquiring first information on a correspondence relationship between a physical component and a logical component in a fronthaul, and means for transmitting the first information to the control device configured to control the RU device. The control device includes means for receiving, from the RU device, the first information on the correspondence relationship between the physical component in the radio unit (RU) device and the logical component in the fronthaul, and means for performing energy saving control of the RU device by using the first information.

A method of a RU device according to a fourth aspect of the present disclosure includes acquiring first information on a correspondence relationship between a physical component in the RU device and a logical component in a fronthaul, and transmitting the first information to a control device configured to control the RU device.

A method of a control device according to a fifth aspect of the present disclosure includes receiving, from a radio unit (RU) device, first information on a correspondence relationship between a physical component in the RU device and a logical component in a fronthaul, and performing energy saving control of the RU device by using the first information.

A program according to a sixth aspect of the present disclosure causes a computer to execute acquiring first information on a correspondence relationship between a physical component in a RU device and a logical component in a fronthaul, and transmitting the first information to a control device configured to control the RU device.

Advantageous Effects of Invention

According to the present disclosure, it is possible to provide an RU device, a control device, a communication method, and a control method capable of achieving energy saving of the RU device.

Brief Description of Drawings

[Fig. 1] Fig. 1 is a configuration diagram of an RU device according to the present disclosure.
[Fig. 2] Fig. 2 is a diagram illustrating a flow of communication processing executed in the RU device according to the present disclosure.
[Fig. 3] Fig. 3 is a configuration diagram of a control device according to the present disclosure.
[Fig. 4] Fig. 4 is a diagram illustrating a flow of control processing executed in the control device according to the present disclosure.
[Fig. 5] Fig. 5 is a configuration diagram of a communication system according to the present disclosure.
[Fig. 6] Fig. 6 is a configuration diagram related to hardware of an O-RU according to the present disclosure.
[Fig. 7] Fig. 7 is a diagram illustrating a flow of processing related to get-config according to the present disclosure.
[Fig. 8] Fig. 8 is a diagram illustrating a data model generated by an O-DU according to the present disclosure.
[Fig. 9] Fig. 9 is a diagram illustrating a flow of processing related to edit-config according to the present disclosure.

[Fig. 10] Fig. 10 is a configuration diagram of the RU device and the control device according to the present disclosure.

Example Embodiment

(First Example Embodiment)

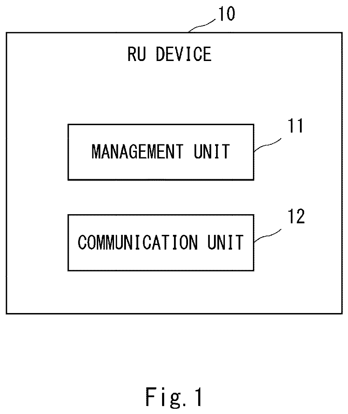

A configuration example of an RU device 10 will be described with reference to Fig. 1. The RU device 10 may be a software component or a module, the processing of which is executed by causing a processor to execute a program stored in a memory. The RU device 10 may be, for example, an O-RU node (referred to as an O-RU below) defined in the O-RAN Alliance. A node may correspond to an entity (device) or may correspond to a function (function).

The RU device 10 includes a management unit 11 and a communication unit 12. The management unit 11 and the communication unit 12 may be software components or modules, the processing of which is executed by causing the processor to execute the program stored in the memory. Alternatively, the management unit 11 and the communication unit 12 may be hardware components such as circuits or chips.

The RU device 10 operates in accordance with several operation modes. For example, the RU device 10 operates in an energy saving mode or a normal mode. The RU device 10 includes a plurality of antenna elements. For example, all antennas included in the RU device 10 may operate in the normal mode, and at least one of a plurality of antennas included in the RU device 10 may be stopped in the energy saving mode. Alternatively, among all the antenna elements included in the RU device 10, an antenna element that operates in the normal mode and an antenna element that operates in the energy saving mode may be separated. The plurality of antenna elements may be arranged in an array. In other words, a plurality of antenna elements may constitute at least one antenna array.

In addition, the RU device 10 may reduce the number of physical components to be operated in the energy saving mode. The physical component may be, for example, a digital processing unit (DPU) or a radio frequency (RF) processing unit (RPU). For example, in the energy saving mode, the RU device 10 may stop the operation of one or more DPUs among the plurality of DPUs. That is, each DPU may operate independently. Operating the DPU independently may mean that each DPU does not depend on the processing operation of other DPUs. Therefore, even if the operation of some DPUs is stopped, the other DPUs can operate. In addition, the DPU may be configured by a field programmable gate array (FPGA) or an application specific integrated circuit (ASIC).

The RU device 10 has a radio communication interface, and is compatible with a wide bandwidth and enables more efficient communication, for example, by combining massive multiple input multiple output (Massive MIMO) and a digital beam forming technology. Massive MIMO makes it possible to direct different beams to each of a plurality of users, for example, by arranging a plurality of antenna elements at equal intervals on a plane (antenna array) and electrically controlling each antenna element. As a result, it is possible to simultaneously connect a large number of users to the O-RU.

The antenna array is constituted by several antenna elements associated to form a desired radiation pattern in the RU device 10. By configuring a plurality of antenna arrays by the RU device 10, it is possible to enable various radiation patterns for beams radiated from the RU device 10.

The management unit 11 manages at least one logical component for identifying the data layer in association with the physical component. The data layer may be paraphrased as, for example, a data stream or the like. The data layer may be data transmitted with the same directivity in MIMO transmission. The data layers are logically distinguished using an extended antenna-carrier identifier (eAxC ID). For example, a plurality of data layers are transmitted in a common physical path used between the RU device 10 and the DU device, and eAxC IDs are assigned to the respective data layers, thereby distinguishing the respective data layers from each other.

The logical component may be an endpoint which is a unit for executing processing, operation, or the like related to the data stream identified by the eAxC ID. By associating the eAxC ID with the endpoint and further associating the endpoint with the physical component, the data stream to be processed by the physical component is determined. Associating the endpoint with the eAxC ID may mean assigning the eAxC ID to the endpoint.

Here, the management unit 11 acquires information (hereinafter, referred to as "first information") regarding a correspondence relationship between a plurality of physical components (for example, DPUs) in the RU device 10 and a plurality of logical components (for example, endpoints) in the fronthaul. The management unit 11 may be used as means for acquiring the first information. Here, the term "acquire" can include meanings such as "generate", "be input", "memorize", and "hold".

More specifically, the first information is information based on the correspondence relationship. More specifically, the first information is information indicating the correspondence relationship. That is, the first information includes, for example, information indicating a logical component and information indicating a physical component with which the logical component is associated. Hereinafter, in the first example embodiment, an example in which these pieces of information are included in the first information will be mainly described.

As described later, the first information is transmitted to a control device 20 and is used for the control of the energy saving mode by the control device 20 (that is, energy saving control). Therefore, it can be said that the first information is information regarding energy saving of the RU device 10. More specifically, it can be said that the first information is information for such energy saving.

The communication unit 12 transmits the acquired first information to the control device that controls the RU device 10. The communication unit 12 may be used as means for transmitting the first information to the control device. The control device may be paraphrased as a management device. The control device that controls the RU device 10 may be referred to as an RU controller. The control device may be, for example, a distributed unit (DU) device or a service management and orchestration (SMO) node (hereinafter, referred to as SMO). However, the control device that controls the RU device 10 is not limited to the DU device or the SMO. For example, the control device may be any node as long as the node can communicate with the RU device 10 and performs a function of a NETCONF client.

As described above, the first information includes information indicating a logical component and information indicating a physical component with which the logical component is associated. The information indicating the logical component may be, for example, information for identifying a data layer. The information for identifying the data layer may be specifically an endpoint. The information indicating the physical component may be, for example, identification information of the physical component. The communication unit 12 may transmit information indicating a plurality of physical components. That is, the communication unit 12 may notify the control device of the logical components processed in the respective physical components.

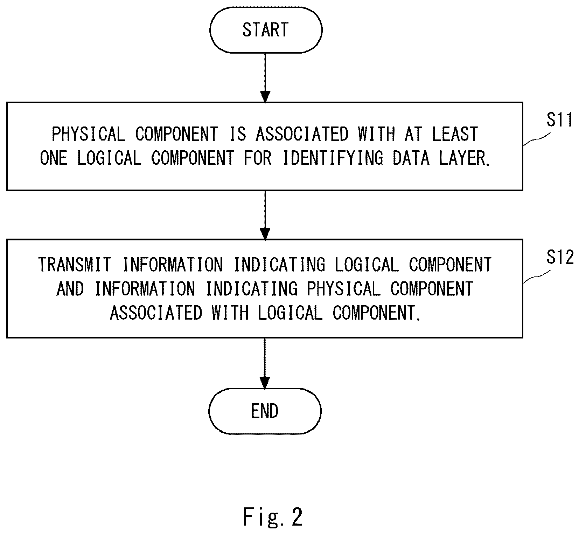

Next, a flow of communication processing executed in the RU device 10 will be described with reference to Fig. 2. First, the management unit 11 manages at least one logical component for identifying a data layer in association with a physical component (S11). At this time, the management unit 11 acquires first information. Next, the communication unit 12 transmits the acquired first information to a control device that controls the RU device 10. The transmitted first information includes information indicating a logical component and information indicating a physical component with which the logical component is associated.

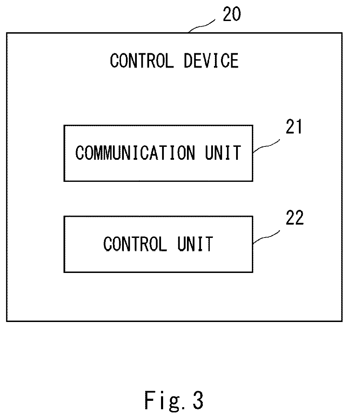

Next, a configuration example of the control device 20 will be described with reference to Fig. 3. The control device 20 may be a software component or a module, the processing of which is executed by causing a processor to execute a program stored in a memory. The control device 20 may be, for example, a DU device, and specifically, may be an O-DU node (hereinafter, referred to as an O-DU) defined by the O-RAN Alliance. Alternatively, the control device 20 may be an SMO node. A node may correspond to an entity (device) or may correspond to a function (function).

The control device 20 includes a communication unit 21 and a control unit 22. The communication unit 21 and the control unit 22 may be software components or modules, the processing of which is executed by causing a processor to execute a program stored in a memory. Alternatively, the communication unit 21 and the control unit 22 may be hardware components such as circuits or chips.

The communication unit 21 receives the first information transmitted by the RU device 10. The communication unit 21 may be used as means for receiving the first information. The received first information includes information indicating a logical component and information indicating a physical component with which the logical component is associated. A plurality of logical components may be associated with the physical component, or one logical component may be associated with the physical component.

The control unit 22 performs energy saving control of the RU device 10 using the received first information. The control unit 22 may be used as means for performing energy saving control of the RU device 10. Here, the energy saving control will be specifically described. The control unit 22 can identify the data layer processed in the physical component by using the information indicating the logical component included in the first information and the information indicating the physical component included in the first information. In the energy saving control of the RU device 10, for example, the control unit 22 may instruct the RU device 10 to stop using some data layers. That is, the control unit 22 may instruct the RU device 10 to stop using the logical component. At this time, the control unit 22 may instruct the RU device 10 to stop using all the logical components associated with the same physical component. As a result, in the RU device 10, it is possible to stop the physical components whose use of all the logical components has been stopped. As a result, energy saving in the RU device 10 can be achieved.

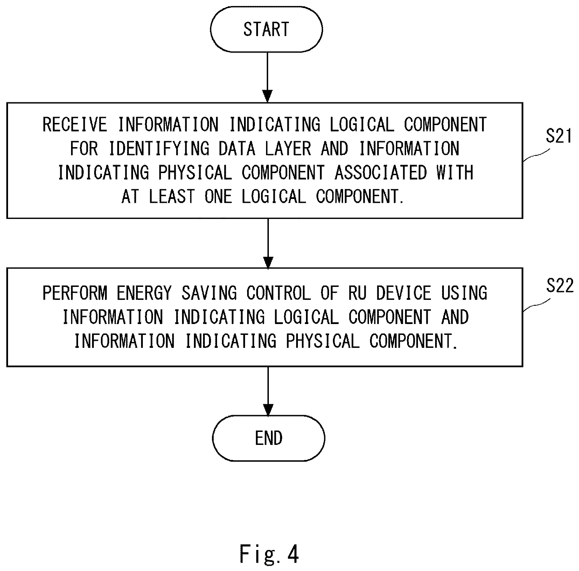

Next, a flow of control processing in the control device 20 will be described with reference to Fig. 4. First, the communication unit 21 receives first information transmitted by the RU device 10 (S21). The received first information includes information indicating a logical component and information indicating a physical component with which the logical component is associated. Next, the control unit 22 performs energy saving control of the RU device using these pieces of information (S22).

As described above, the RU device 10 transmits the first information (information indicating the logical component and information indicating the physical component with which the logical component is associated are included) to the control device 20. The control device 20 can specify a plurality of logical components associated with the same physical component from the received information. As a result, the control device 20 can select the logical component to be stopped so that the physical component can be stopped. As a result, the energy saving operation in the RU device 10 can be enabled.

(Second Example Embodiment)

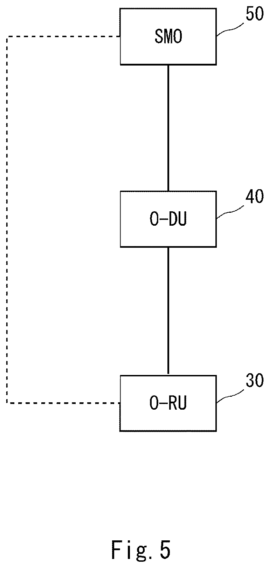

Next, a configuration example of a communication system will be described with reference to Fig. 5. The communication system in Fig. 5 illustrates an M-Plane architecture model defined in the O-RAN Alliance. The communication system in Fig. 5 includes an O-RU 30, an O-DU 40, and an SMO 50. The O-RU 30 corresponds to the RU device 10 in Fig. 1. The O-DU 40 corresponds to the control device 20 in Fig. 3. In addition, the communication system may include an O-CU node and a near real-time RAN intelligent controller (Near-RT RIC) node (not illustrated). Furthermore, the SMO 50 may include a non real-time RAN intelligent controller (non-RT RIC) node (not illustrated). The O-RU may be simply referred to as an RU. The O-DU may be simply represented as DU. The O-CU may be simply referred to as a CU.

In addition, the O-RU 30 and the O-DU 40 may execute communication related to a C-plane and a U-plane. A virtual local area network (VLAN) different from a VLAN assigned to an M-Plane may be assigned to the C-Plane and the U-Plane. Assigning a VLAN may mean assigning a VLAN ID. The same VLAN may be assigned to each of the C-Plane and the U-Plane, or different VLANs may be assigned thereto.

The O-RU 30 is a logical node that performs a lower function (PHY-Low) of a physical layer and radio frequency (RF) processing. Alternatively, the O-RU 30 may be a physical device on which an O-RU that is a logical node is mounted. The lower function of the physical layer may be, for example, fast Fourier transform (FFT)/inverse FFT (IFFT) processing, bea forming (BF) processing, and the like.

The O-DU 40 is a logical node that executes functions in a packet data convergence protocol (PDCP) layer, a radio link control (RLC) layer, and a media access control (MAC) layer, and further executes an upper function of a physical layer. Alternatively, the O-DU 40 may be a physical device on which an O-DU that is a logical node is mounted. The higher function of the physical layer may be, for example, encoding and modulation processing, decoding and demodulation processing, and the like. The function in the PDCP layer may be executed in a logical node referred to as a central unit (CU) (not illustrated).

The SMO 50 performs maintenance and orchestration (control) between a RAN Intelligent Controller (RIC), which is a platform that enables optimization of radio resource management and automation of operation, and a radio access network (RAN). Although Fig. 5 illustrates a configuration in which the O-RU 30 and the O-DU 40 are connected and the O-DU 40 and the SMO 50 are connected, the O-RU 30 and the SMO 50 may be connected, as illustrated using a dotted line. In addition, although Fig. 5 illustrates a one-to-one configuration of the O-RU 30, the O-DU 40, and the SMO 50, the O-RU 30 may be managed by a plurality of O-DUs 40. Further, the O-RU 30 may be managed by a plurality of SMOs 50. In addition, the SMO 50 may be replaced with an NMS.

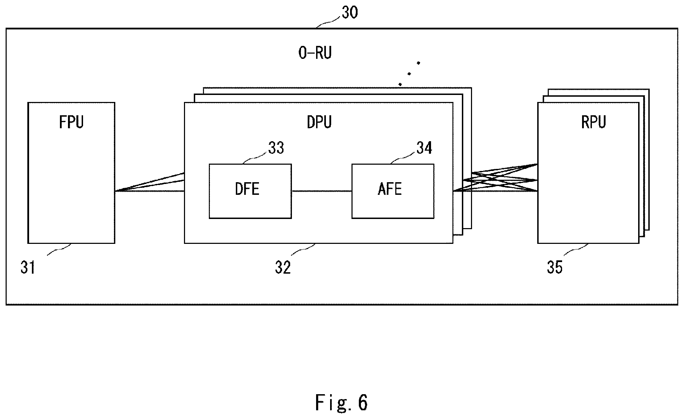

Next, a configuration diagram related to hardware of the O-RU 30 will be described with reference to Fig. 6. The O-RU 30 includes a fronthaul processing unit (FPU) 31, a digital processing unit (DPU) 32, and a radio frequency processing unit (RPU) 35. The FPU 31 is connected to the plurality of DPUs 32. Further, each DPU 32 is connected to a plurality of RPUs 35.

The FPU 31 receives a compressed or decompressed an enhanced common public radio interface (eCPRI) packet from the O-DU 40, and performs opticalto-electrical conversion. The eCPRI packet may be, for example, a packet transmitted via a user datagram protocol (UDP)/IP. The eCPRI packet may be paraphrased as a frame transmitted in an upper layer of the UDP/IP.

The DPU 32 includes a digital front end (DFE) 33 and an analog front end (AFE) 34. The DFE 33 receives the eCPRI packet from the FPU 31 via s packet interface. The DFE 33 performs compression or uncompression, low-Phy processing, digital down conversion (DDC), digital up conversion (DUC), crest factor reduction (CFR), and digital pre-distortion (DPD) on the received packet. The low-Phy processing may be, for example, fast Fourier transform (FFT), inverse FFT (IFFT), cyclic prefix addition (CP addition), CP removal, physical random access channel (PRACH) filtering, or the like.

The AFE 34 executes an analog to digital converter (ADC) or a digital to analog converter (DAC). A signal obtained by executing the ADC or the DAC in the AFE 34 is output to the RPU 35.

The DPU 32, the AFE 34, and the RPU 35 may be modules based on FPGA or ASIC, respectively. Further, the DPU 32, the AFE 34, and the RPU 35 may be achieved by using one system on a chip (SoC) or may be achieved by using a plurality of integrated circuits (ICs).

In the RPU 35, signal processing using a mixer, a power amplifier (PA), a low noise amplifier (LNS), or the like is executed. Further, after the signal processing is executed, a signal is transmitted via an antenna element.

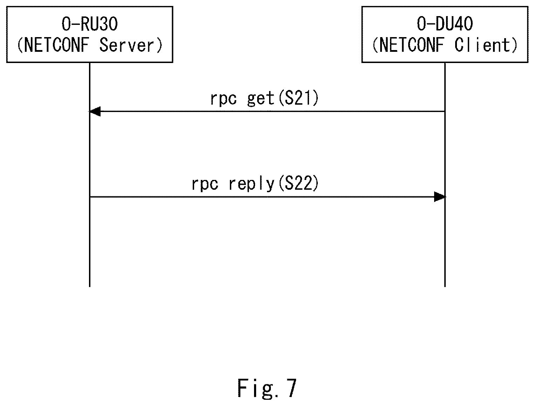

Next, a flow of processing related to get-config included in NETCONF operations executed in the Configuration Management function will be described with reference to Fig. 7. In Fig. 7, the O-RU 30 operates as a NETCONF Server, and the O-DU 40 operates as a NETCONF Client. First, the O-DU 40 transmits a request message to the O-RU 30 (S21). For example, rpc (remote procedure call) get may be set in the request message. Then, the O-RU 30 transmits a reply message to the request message to the O-DU 30 (S22). For example, rpc-reply may be set in the reply message. The reply message in which rpc-reply is set includes a parameter retained by the O-RU 30 and the state of the O-RU 30, as data. That is, the O-DU 40 retrieves the parameter retained by the O-RU 30, the state of the O-RU 30, and the like from the O-RU 20 by executing the get procedure.

The parameter retained by the O-RU 30 may be indicated, for example, in the form of a data model (YANG data model) described using YANG. In addition, a YANG data model indicating a parameter or a state of the O-RU 30 that can be changed by the O-DU 40 may be defined as a YANG module. Specifically, a YANG data model indicating a parameter or a state used in the M-Plane may be defined as a reusable YANG module.

For example, the O-DU 40 fetches, receives, or retrieves a list of tx-arrays and rx-arrays in o-ran-uplane-conf.yang from the O-RU 30, and determines, specifies, or extracts tx-array elements and rx-array elements. tx-arrays indicates the entire antenna array used for transmission, and rx-arrays indicates the entire antenna array used for reception. o-ran-uplane-conf.yang indicates the YANG module defined in the O-RAN Alliance. tx-array elements and rx-array elements may be antenna arrays configured in the O-RU 30. tx-array elements is an antenna array related to transmission at the O-RU 30, and rx-array elements is an antenna array related to reception at the O-RU 30.

Further, the O-DU 40 fetches, receives, or retrieves a list of static-low-level-tx-endpoints and static-low-level-rx-endpoints in o-ran-uplane-conf.yang from the O-RU 30. The O-DU 40 determines, specifies, or extracts static-low-level-tx-endpoint elements and static-low-level-rx-endpoint elements. The static-low-level-tx-endpoint elements are, for example, information of a fronthaul data processing unit related to transmission, and the static-low-level-rx-endpoint elements are, for example, information of a fronthaul data processing unit related to reception.

Further, the O-DU 40 fetches, receives, or acquires, from the O-RU 30, a saving group associated with the list of the static low-level-tx-endpoints and the static low-level-rx-endpoints in o-ran-uplane-conf.yang. In the second example embodiment, these pieces of information correspond to the first information. The O-DU 40 determines, specifies, or extracts a saving group associated with each of the static-low-level-tx-endpoint elements and the static-low-level-rx-endpoint elements.

The saving group is information related to hardware in the O-RU 30, and may be, for example, information for identifying the DPU 32. For example, it is assumed that saving group = 0 and static-low-level-tx-endpoint elements = 0 to 3 are associated with each other. 0 to 3 are values used to identify the static-low-level-tx-endpoint elements. In this case, in the DPU 32 identified by saving group = 0, a data layer associated with the static-low-level-tx-endpoint elements = 0 to 3 is processed. Further, if saving group = 1 and static-low-level-tx-endpoint elements = 4 to 7 are associated with each other, then in the DPU 32 identified by saving group = 1, a data layer associated with the static-low-level-tx-endpoint elements = 4 to 7 is processed. Alternatively, the saving group may be information for identifying a group including a plurality of DPUs 32. Alternatively, the saving group may be information for identifying a group including a plurality of physical components such as the DPU 32 and the RPU 35. 0 to 7 are values used to identify the static-low-level-tx-endpoint elements.

In this case, the O-DU 40 may store information expressed as follows based on the information (that is, the first information) received from the O-RU 30.

$$\text{static-low-level-tx-endpoint}[0\text{-}3]\ \text{saving-group} = 0$$

$$\text{static-low-level-tx-endpoint}[4\text{-}7]\ \text{saving-group} = 1$$

If the O-DU 40 determines the tx-array elements and the static-low-level-tx-endpoint element, the O-DU 40 examines a relationship between the tx-array elements and the static-low-level-tx-endpoint element. Further, if the O-DU 40 determines the rx-array elements and the static-low-level-rx-endpoint element, the O-DU 40 examines a relationship between the rx-array elements and the static-low-level-rx-endpoint element.

As a result of the analysis, for example, the O-DU 40 may specify a static-low-level-tx-endpoint element associated with an antenna element constituting the tx-array element. Further, the O-DU 40 may specify a static-low-level-rx-endpoint element associated with an antenna element constituting the rx-array element.

Further, the O-DU 40 creates or generates a low-level-tx-endpoint element related to the static-low-level-tx-endpoint element, and creates or generates a low-level-rx-endpoint element related to the static-low-level-rx-endpoint element. The low-level-tx-endpoint element and the low-level-rx-endpoint element may be used, for example, to configure a desired parameter or state for the static-low-level-tx-endpoint element and the static-low-level-rx-endpoint element.

In addition, the O-DU 30 sets an extended antenna-carrier (eAxC) ID in the low-level-tx-endpoint element and the low-level-rx-endpoint. In generating a plurality of low-level-tx-endpoint elements, the O-DU 40 sets an eAxC ID having a different value for each low-level-tx-endpoint element. Similarly, in generating a plurality of low-level-rx-endpoint elements, the O-DU 40 sets an eAxC ID having a different value for each low-level-rx-endpoint element. The eAxC ID is a 16-bit value including DU_Port_ID, RU_Port_ID, CC_ID, and BandSector_ID. In addition, in a case where the eAxC ID set in the low-level-tx-endpoint element is used for the C-Plane and the U-Plane, the eAxC ID used for the C-Plane may be different from or the same as the eAxC ID used for the U-Plane. In a case where the eAxC ID set in the low-level-rx-endpoint is also used for the C-Plane and the U-Plane, the eAxC ID used for the C-Plane may be different from or the same as the eAxC ID used for the U-Plane.

Furthermore, the O-DU 40 generates a tx-array-carrier and an rx-array-carrier. The tx-array-carrier and the rx-array-carrier have "active" as a parameter, and any value of "ACTIVE", "INACTIVE", or "SLEEP" is set as the parameter "active". The O-DU 30 generates a low-level-tx-links element and a low-level-rx-link element in order to associate the values of the parameter "active" set for the tx-array-carrier and the rx-array-carrier with the low-level-tx-endpoint element and the low-level-rx-endpoint element. That is, the O-DU 40 associates the values of the parameter "active" set for the tx-array-carrier and the rx-array-carrier with the low-level-tx-endpoint element and the low-level-rx-endpoint element via the low-level-tx-links element and the low-level-rx-link element. The associating may be paraphrased as, for example, applying, setting, or the like.

For example, in a case where "ACTIVE" is set to the parameter "active", the antenna elements indicated by the static-low-level-tx-endpoint elements or the static-low-level-rx-endpoint elements may transition to the state of awake. In addition, in a case where "SLEEP" is set to the parameter "active", the antenna elements indicated by the static-low-level-tx-endpoint elements or the static-low-level-rx-endpoint elements may transition to the state of sleeping. Furthermore, in a case where "INACTIVE" is set to the parameter "active", all the functions of the antenna elements indicated by the static-low-level-tx-endpoint elements or the static-low-level-rx-endpoint elements may be stopped.

The O-DU 40 associates tx-array-carrier in which "SLEEP" is set to the parameter "active" with low-level-tx-endpoint elements associated with the antenna element to be transitioned to the state of sleeping. In addition, the O-DU 40 associates rx-array-carrier in which "SLEEP" is set to the parameter "active" with low-level-rx-endpoint elements associated with the antenna element to be transitioned to the state of sleeping.

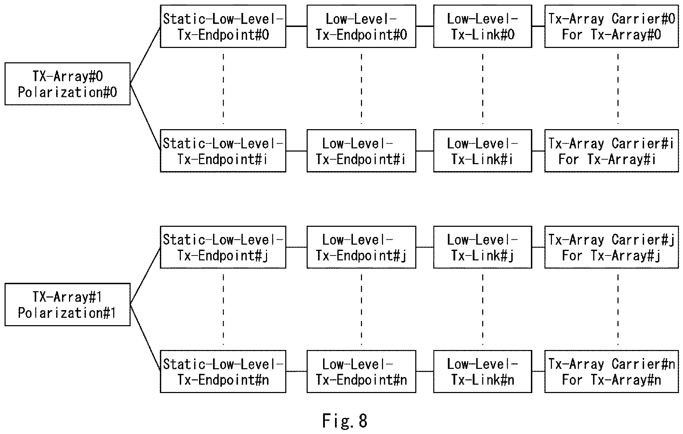

Here, a data model generated by the O-DU 40 based on the parameters retrieved from the O-RU 30 will be described with reference to Fig. 8.

Fig. 8 illustrates an example of a data model related to the antenna array on the transmission side in the O-RU 30. The data model of Fig. 8 illustrates an example in a case where the antenna array on the transmission side in the O-RU 30 is configured by two antenna arrays of a tx-array #0 and a tx-array #1. The data model of Fig. 8 indicates that static-low-level-tx-endpoint #0 to static-low-level-tx-endpoint #i (i is an integer of 1 or more) constitute the tx-array #0. Furthermore, it is indicated that static-low-level-tx-endpoint #j to static-low-level-tx-endpoint #n (j and n are integers of 1 or more, and n > j = i + 1) constitute the tx-array #1. In addition, the number of antenna elements constituting the tx-array #0 and the number of antenna elements constituting the tx-array #1 may be the same or different. The tx-array #0 and the tx-array #1 may be, for example, antenna arrays having different polarization planes.

In addition, a value set to the parameter "active" in the tx-array-carrier #0 is associated with low-level-tx-endpoint #0 indicating the setting of the static-low-level-tx-endpoint #0, through the low-level-tx-link #0. Similarly, in the other static-low-level-tx-endpoint, a value set to the parameter "active" in the tx-array-carrier #n is associated with low-level-tx-endpoint #n indicating the setting of the static-low-level-tx-endpoint #n, through the low-level-tx-link #n.

Here, a setting example of the parameter "active" in a case where the O-RU 30 is operated in the energy saving mode will be described. The O-DU 40 achieves energy saving of the O-RU 30 by reducing the number of processing of the data layer in the O-RU 30 and stopping the operation of physical components in the O-RU 30. The O-DU 40 may set, for example, "INACTIVE" as the parameter "active" to all the static-low-level-tx-endpoints associated with saving group = 0 such that the DPU 32 can be stopped. As a result, in the DPU 32 identified by the saving group = 0, there is no data layer to be processed, and thus the O-RU 30 can stop the supply of power to the DPU 32 identified by the saving group = 0. As described above, in a case where the O-DU 40 reduces the number of processing of the data layer in the O-RU 30, the O-RU 30 can stop the DPU 32 by setting the static-low-level-tx-endpoint associated with the same saving group to INACTIVE. As a result, energy saving in the O-RU 30 can be achieved. In addition, even in a case where "SLEEP" is set as the parameter "active", the O-RU 30 may perform the same processing or operation as in a case where "INACTIVE" is set.

The O-RU 30 may also associate at least one antenna element with a set saving group. Then, in a case where "INACTIVE" is set to the endpoint associated with a specific saving group, the supply of power to the antenna element associated with the saving group may be stopped. For example, "INACTIVE" may be set as the parameter "active" to all the static-low-level-tx-endpoints associated with the saving group = 0. Accordingly, if the DPU 32 identified by the saving group = 0 is stopped, the supply of power to the antenna element associated with the saving group = 0 may be stopped. Stopping the supply of power to the antenna element may be achieved by stopping the supply of power to the RPU 35. As a result, the RPU 35 and the antenna element can also be stopped, and energy saving of the O-RU 30 can be achieved.

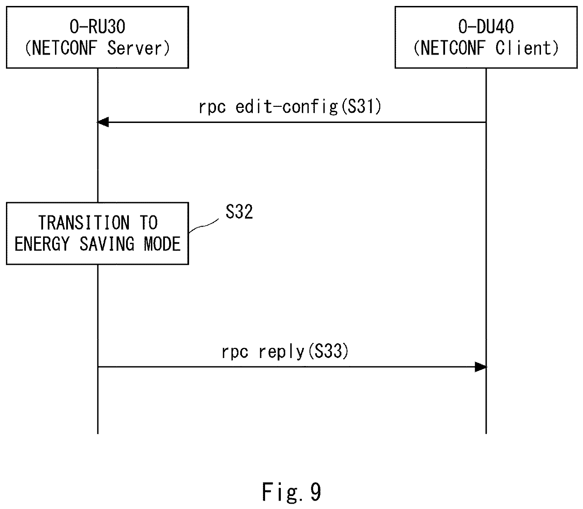

Next, a flow of processing related to edit-config included in NETCONF operations executed in the Configuration Management function will be described with reference to Fig. 9. As illustrated in Fig. 8, the O-DU 40 updates the setting information acquired from the O-RU 30 to the data model indicating the static-low-level-tx-endpoint for transitioning to the energy saving mode. The O-DU 40 transmits a request message in which rpc edit-config is set to the O-RU 30 (S31). The request message includes the data model updated in the O-DU 40.

Next, the O-RU 30 updates the state of a physical component according to the received data model (S32). For example, the O-RU 30 stops processing of a data layer regarding the static-low-level-tx-endpoint in which "INACTIVE" is set. Further, the O-RU 30 stops the DPU 32 in which there is no data layer to be processed. Stopping the DPU 32 may mean stopping the supply of power to the DPU 32 or may mean shutting down the DPU 32. The O-RU 30 may also stop other physical components associated with the same saving group as the DPU 32 to be stopped.

Next, the O-RU 30 transmits a reply message in which rpc-reply is set to the O-DU 40 (S33).

As described above, the O-RU 30 according to the second example embodiment transmits the first information (including information about static-low-level-tx-endpoint, and a saving group, which is information about a physical component with which the static-low-level-tx-endpoint is associated) to the O-DU 40. In operating the O-RU 30 in the energy saving mode, the O-DU 40 can stop the operation of the physical component in the O-RU 30 by setting all the static-low-level-tx-endpoints associated with the same physical component to "INACTIVE". As a result, energy saving in the O-RU 30 can be achieved.

Furthermore, in setting the static-low-level-tx-endpoint to "INACTIVE", the O-DU 40 may not assign the eAxC ID to the static-low-level-tx-endpoint set to "INACTIVE". As a result, the O-DU 40 can reduce the number of eAxC IDs. The O-DU 40 may perform the same processing or operation as in the case where "INACTIVE" is set also in the case of setting the static-low-level-tx-endpoint to "SLEEP".

In the method in which the O-DU 40 sets the endpoint to "INACTIVE", the O-DU 40 may specify the eAxC ID that is not in data conduction using a C-Plane message. In addition, the O-DU 40 may stop all the physical components associated with the saving group by designating the value of the saving-group instead of designating the eAxC ID. For designating the value of the saving-group, for example, the C-Plane message is used. The C-Plane message designating the value of the saving-group may use an existing C-Plane message (for example, a C-Plane message similar to a C-Plane message for designating the eAxC ID) or may use a new C-Plane message (for example, a dedicated C-Plane message for designating the value of the saving-group).

Note that the saving group is not limited to the above specific example. For example, the physical components corresponding to the individual saving groups (that is, the physical components included in the individual saving groups) are not limited to the DPU 32. Each saving group may include other physical components (for example, an amplifier for an antenna, that is, an amplifier included in the RPU 35) instead of or in addition to the DPU 32 (for example, FPGA). Since the type of the corresponding physical component is different for each saving group, the degree of energy saving achieved for each saving group may be different.

For example, it is assumed that saving-group = 0 corresponds to a plurality of types of physical components (for example, the DPU 32 and the amplifier for the antenna), and saving-group = 1 corresponds to one type of physical component (for example, the DPU 32). In this case, by avoiding the use of the endpoint corresponding to the saving-group = 0, it is highly probable that energy saving having a larger effect is achieved as compared with a case of avoiding the use of the endpoint corresponding to the saving-group = 1. Therefore, the O-DU 40 may selectively stop the operation of the saving-group = 0 or the saving-group = 1 according to the required degree of energy saving.

The application of the saving group is not limited to energy saving. For example, a failure may be monitored for each saving group. That is, if a failure (for example, failure) of a physical component included in any saving group occurs, the O-DU 40 receives an alarm corresponding to the saving group. In this case, the O-DU 40 may avoid using an endpoint corresponding to this saving group.

For example, it is assumed that an alarm corresponding to the saving-group = 1 of the saving-group = 0 and the saving-group = 1 is received. In this case, the O-DU 40 stops the operation of the endpoint corresponding to the saving-group = 1, and uses the endpoint corresponding to the saving-group = 0. As a result, energy saving of the RU device 10 can be achieved, and it is possible to cope with a failure of a physical component in the RU device 10.

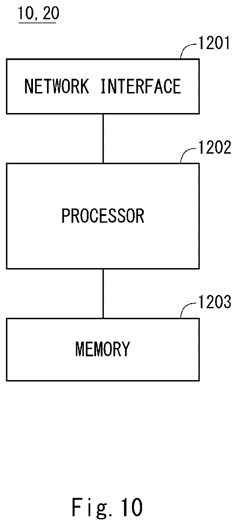

Fig. 10 is a block diagram illustrating a configuration example of the RU device 10 and the control device 20 (hereinafter, referred to as the RU device 10 and the like). Referring to Fig. 10, the RU device 10 and the like include a network interface 1201, a processor 1202, and a memory 1203. The network interface 1201 is used to communicate with a network node (e.g., eNB, MME, or P-GW). The network interface 1201 may include, for example, a network interface card (NIC) conforming to IEEE 802.3 series. Here, the eNB represents an evolved node B, the MME represents a mobility management entity, and the P-GW represents a packet data network gateway. The IEEE represents the Institute of Electrical and Electronics Engineers.

The processor 1202 executes the processing in the RU device 11 and the like described using the flowcharts in the above-described example embodiments, by reading software (computer programs) from the memory 1203 and executing the software. The processor 1202 may be, for example, a microprocessor, a micro processing unit (MPU), or a central processing unit (CPU). The processor 1202 may include a plurality of processors.

The memory 1203 includes a combination of a volatile memory and a nonvolatile memory. The memory 1203 may include a storage disposed away from the processor 1202. In this case, the processor 1202 may access the memory 1203 via an input/output (I/O) interface (not illustrated).

In the example in Fig. 10, the memory 1203 is used to store a group of software modules. The processor 1202 can execute the processing in the RU device 10 and the like described in the above-described example embodiments by reading the group of software modules from the memory 1203 and executing the group of software modules.

As described with reference to Fig. 10, each of the processors included in the RU device 10 and the like executes one or a plurality of programs including a command group causing a computer to perform the algorithm described with reference to the drawings.

The RU device 10 and the control device 20 include similar network interfaces, processors, and memories, respectively. In addition, the RU device 10 includes antennas for radio communication to UEs or other RU devices. The antenna uses the antenna array (array antenna) as described above.

In the above-described example, the program can be stored using various types of non-transitory computer readable medium and supplied to a computer. The non-transitory computer readable media include various types of tangible storage media. Examples of the non-transitory computer readable medium include a magnetic storage medium (for example, a flexible disk, a magnetic tape, or a hard disk drive), an optical magnetic storage medium (for example, a magneto-optical disk), a compact disc-read only memory (CD-ROM), a CD-R, a CD-R/W, and a semiconductor memory (for example, a mask ROM, a programmable ROM (PROM), an erasable PROM (EPROM), a flash ROM, or a random access memory (RAM)). In addition, the program may be supplied to the computer by various types of transitory computer readable media. Examples of transitory computer readable media include electrical signals, optical signals, and electromagnetic waves. The transitory computer-readable media can provide the program to the computer via a wired communication line such as an electric wire and optical fibers or a wireless communication line.

While the present disclosure has been particularly shown and described with reference to example embodiments thereof, the present disclosure is not limited to these example embodiments. It will be understood by those of ordinary skill in the art that various changes in form and details may be made therein without departing from the spirit and scope of the present disclosure as defined by the claims. And each example embodiment can be appropriately combined with other embodiments.

Each of the drawings is merely an example to illustrate one or more example embodiments. Each of the drawings is not associated with only one specific example embodiment, but may be associated with one or more other example embodiments. As those ordinary skilled in the art will appreciate, various features or steps described with reference to any one of the drawings may be combined with features or steps illustrated in one or more other drawings, for example, to create an example embodiment that is not explicitly illustrated or described. All of the features or steps illustrated in any one of the figures for explaining illustrative example embodiments are not necessarily mandatory, and some features or steps may be omitted. The order of the steps described in any of the figures may be changed as appropriate.

Some or all of the example embodiments described above may be described as, but are not limited to, the following Supplementary Notes.

(Supplementary Note 1)

A radio unit (RU) device including:

means for acquiring first information on a correspondence relationship between a physical component in the RU device and a logical component in a fronthaul; and
means for transmitting the first information to a control device configured to control the RU device.

(Supplementary Note 2)

The RU device according to Supplementary Note 1, in which the first information includes information indicating the logical component and information indicating the physical component with which the logical component is associated.

(Supplementary Note 3)

The RU device according to Supplementary Note 1 or 2, in which the physical component executes arithmetic processing related to a data layer identified by the logical component.

(Supplementary Note 4)

The RU device according to any one of Supplementary Notes 1 to 3, in which

the RU device includes a plurality of the physical components, and
each of the physical components operates independently.

(Supplementary Note 5)

The RU device according to any one of Supplementary Notes 1 to 4, further including:

means for receiving a message instructing an operation in an energy saving mode; and
means for stopping an operation of a physical component associated with identification information included in the message.

(Supplementary Note 6)

The RU device according to any one of Supplementary Notes 1 to 5, in which the means for transmission of the first information transmits the first information to the control device in a case where receiving, from the control device, a request message requesting acquisition of information.

(Supplementary Note 7)

The RU device according to any one of Supplementary Notes 1 to 6, in which

a data layer in the fronthaul is identified by an extended antenna-carrier identifier (eAxC ID),
the eAxC ID is allocated to an endpoint unit managed by a management plane (M-Plane), and
the endpoint is managed in association with the physical component.

(Supplementary Note 8)

A control device including:

means for receiving, from a radio unit (RU) device, first information on a correspondence relationship between a physical component in the RU device and a logical component in a fronthaul; and
means for performing energy saving control of the RU device by using the first information.

(Supplementary Note 9)

The control device according to Supplementary Note 8, further including means for transmitting, to the RU device, a message including information indicating the logical component whose operation is stopped.

(Supplementary Note 10)

A communication system including

a radio unit (RU) device and
a control device configured to control the RU device, in which
the RU device includes:

means for acquiring first information on a correspondence relationship between a physical component in the RU device and a logical component in a fronthaul; and
means for transmitting the first information to the control device configured to control the RU device, and
the control device includes:

means for receiving, from the RU device, the first information on the correspondence relationship between the physical component in the radio unit (RU) device and the logical component in the fronthaul; and
means for performing energy saving control of the RU device by using the first information.

(Supplementary Note 11)

The communication system according to Supplementary Note 10, in which the first information includes information indicating the logical component and information indicating the physical component with which the logical component is associated.

(Supplementary Note 12)

A method of a radio unit (RU) device, the method including:

acquiring first information on a correspondence relationship between a physical component in the RU device and a logical component in a fronthaul; and
transmitting the first information to a control device configured to control the RU device.

(Supplementary Note 13)

A method of a control device, the method including:

receiving, from a radio unit (RU) device, first information on a correspondence relationship between a physical component in the RU device and a logical component in a fronthaul; and
performing energy saving control of the RU device by using the first information.

(Supplementary Note 14)

A program causing a computer to execute:

acquiring first information on a correspondence relationship between a physical component in a RU device and a logical component in a fronthaul; and
transmitting the first information to a control device configured to control the RU device.

(Supplementary Note 15)

A program causing a computer to execute:

receiving, from a radio unit (RU) device, first information on a correspondence relationship between a physical component in the RU device and a logical component in a fronthaul; and
performing energy saving control of the RU device by using the first information.

Some or all of the elements (such as components and functions, for example) described in Supplementary Notes 2 to 7 dependent on Supplementary Note 1 may be dependent on Supplementary Notes 8, 10, and 12 to 15 as well with similar dependent relationships to those of Supplementary Notes 2 to 7. Some or all of the elements described in any Supplementary Note may be applied to various types of hardware components, software components, recording means for recording software components, systems, and methods.
This application is based upon and claims the benefit of priority from Japanese patent application No. 2023-019066, filed on February 10, 2023, the disclosure of which is incorporated herein in its entirety by reference.

Reference Signs List

10    RU device
11    management unit
12    communication unit
20    control device
21    communication unit
22    control unit
30    O-RU
31    FPU
32    DPU
33    DFE
34    AFE
35    RPU
40    O-DU
50    SMO

**Claims**

1.    A radio unit (RU) device comprising:

means for acquiring first information on a correspondence relationship between a physical component in the RU device and a logical component in a fronthaul; and

means for transmitting the first information to a control device configured to control the RU device.

2. The RU device according to claim 1, wherein the first information includes information indicating the logical component and information indicating the physical component with which the logical component is associated.

3. The RU device according to claim 1 or 2, wherein the physical component executes arithmetic processing related to a data layer identified by the logical component.

4. The RU device according to claim 1 or 2, wherein

   the RU device includes a plurality of the physical components, and
   each of the physical components operates independently.

5. The RU device according to claim 1 or 2, further comprising:

   means for receiving a message instructing an operation in an energy saving mode; and
   means for stopping an operation of a physical component associated with identification information included in the message.

6. The RU device according to claim 1 or 2, wherein the means for transmission of the first information transmits the first information to the control device in a case where receiving, from the control device, a request message requesting acquisition of information.

7. The RU device according to claim 1 or 2, wherein

   a data layer in the fronthaul is identified by an extended antenna-carrier identifier (eAxC ID),
   the eAxC ID is allocated to an endpoint unit managed by a management plane (M-Plane), and
   the endpoint is managed in association with the physical component.

8. A control device comprising:

   means for receiving, from a radio unit (RU) device, first information on a correspondence relationship between a physical component in the RU device and a logical component in a fronthaul; and
   means for performing energy saving control of the RU device by using the first information.

9. The control device according to claim 8, further comprising means for transmitting, to the RU device, a message including information indicating the logical component whose operation is stopped.

10. A communication system comprising:

    a radio unit (RU) device; and
    a control device configured to control the RU device, wherein
    the RU device includes:

       means for acquiring first information on a correspondence relationship between a physical component in the RU device and a logical component in a fronthaul; and
       means for transmitting the first information to the control device configured to control the RU device, and
       the control device includes:

          means for receiving, from the RU device, the first information on the correspondence relationship between the physical component in the radio unit (RU) device and the logical component in the fronthaul; and
          means for performing energy saving control of the RU device by using the first information.

11. The communication system according to claim 10, wherein the first information includes information indicating the logical component and information indicating the physical component with which the logical component is associated.

**12.** The communication system according to claim 10 or 11, wherein the physical component executes arithmetic processing related to a data layer identified by the logical component.

**13.** The communication system according to claim 10 or 11, wherein

the RU device includes a plurality of the physical components, and
each of the physical components operates independently.

**14.** The communication system according to claim 10 or 11, wherein the RU device further includes:

means for receiving a message instructing an operation in an energy saving mode; and
means for stopping an operation of a physical component associated with identification information included in the message.

**15.** The communication system according to claim 10 or 11, wherein the means for transmission of the first information transmits the first information to the control device in a case where receiving, from the control device, a request message requesting acquisition of information.

**16.** The communication system according to claim 10 or 11, wherein

a data layer in the fronthaul is identified by an extended antenna-carrier identifier (eAxC ID),
the eAxC ID is allocated to an endpoint unit managed by a management plane (M-Plane), and
the endpoint is managed in association with the physical component.

**17.** A method of a radio unit (RU) device, the method comprising:

acquiring first information on a correspondence relationship between a physical component in the RU device and a logical component in a fronthaul; and
transmitting the first information to a control device configured to control the RU device.

**18.** A method of a control device, the method comprising:

receiving, from a radio unit (RU) device, first information on a correspondence relationship between a physical component in the RU device and a logical component in a fronthaul; and
performing energy saving control of the RU device by using the first information.

**19.** A program causing a computer to execute:

acquiring first information on a correspondence relationship between a physical component in a RU device and a logical component in a fronthaul; and
transmitting the first information to a control device configured to control the RU device.

**20.** A program causing a computer to execute:

receiving, from a radio unit (RU) device, first information on a correspondence relationship between a physical component in the RU device and a logical component in a fronthaul; and
performing energy saving control of the RU device by using the first information.

10

RU DEVICE

MANAGEMENT UNIT — 11

COMMUNICATION UNIT — 12

Fig. 1

START

PHYSICAL COMPONENT IS ASSOCIATED WITH AT LEAST
ONE LOGICAL COMPONENT FOR IDENTIFYING DATA LAYER.  S11

TRANSMIT INFORMATION INDICATING LOGICAL COMPONENT
AND INFORMATION INDICATING PHYSICAL COMPONENT
ASSOCIATED WITH LOGICAL COMPONENT.  S12

END

Fig. 2

20

CONTROL DEVICE

COMMUNICATION UNIT    21

CONTROL UNIT    22

Fig. 3

START

RECEIVE INFORMATION INDICATING LOGICAL COMPONENT FOR IDENTIFYING DATA LAYER AND INFORMATION INDICATING PHYSICAL COMPONENT ASSOCIATED WITH AT LEAST ONE LOGICAL COMPONENT.  S21

PERFORM ENERGY SAVING CONTROL OF RU DEVICE USING INFORMATION INDICATING LOGICAL COMPONENT AND INFORMATION INDICATING PHYSICAL COMPONENT.  S22

END

Fig. 4

Fig. 5

Fig. 6

Fig. 7

| TX-Array#0 Polarization#0 | Static-Low-Level- Tx-Endpoint#0 | Low-Level- Tx-Endpoint#0 | Low-Level- Tx-Link#0 | Tx-Array Carrier#0 For Tx-Array#0 |
| | Static-Low-Level- Tx-Endpoint#i | Low-Level- Tx-Endpoint#i | Low-Level- Tx-Link#i | Tx-Array Carrier#i For Tx-Array#i |
| TX-Array#1 Polarization#1 | Static-Low-Level- Tx-Endpoint#j | Low-Level- Tx-Endpoint#j | Low-Level- Tx-Link#j | Tx-Array Carrier#j For Tx-Array#j |
| | Static-Low-Level- Tx-Endpoint#n | Low-Level- Tx-Endpoint#n | Low-Level- Tx-Link#n | Tx-Array Carrier#n For Tx-Array#n |

Fig. 8

Fig. 9

<u>10, 20</u>

~1201

NETWORK INTERFACE

~1202

PROCESSOR

~1203

MEMORY

Fig. 10

## INTERNATIONAL SEARCH REPORT

| International application No. |
|---|
| **PCT/JP2024/003851** |

### A. CLASSIFICATION OF SUBJECT MATTER

*H04W 52/02*(2009.01)i; *H04W 88/08*(2009.01)i; *H04W 92/04*(2009.01)i
FI:    H04W52/02; H04W88/08; H04W92/04

According to International Patent Classification (IPC) or to both national classification and IPC

### B. FIELDS SEARCHED

Minimum documentation searched (classification system followed by classification symbols)

H04W52/02; H04W88/08; H04W92/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2022-74947 A (KYOCERA CORPORATION) 18 May 2022 (2022-05-18) paragraphs [0039]-[0042] | 1-20 |
| A | WO 2015/020035 A1 (KYOCERA CORPORATION) 12 February 2015 (2015-02-12) paragraphs [0058]-[0059], [0066], [0074] | 1-20 |

☐ Further documents are listed in the continuation of Box C.        ☑ See patent family annex.

| | |
|---|---|
| *      Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **15 March 2024** | **26 March 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/003851**

| Patent document cited in search report | Publication date (day/month/year) | Patent family member(s) | Publication date (day/month/year) |
|---|---|---|---|
| JP 2022-74947 A | 18 May 2022 | (Family: none) | |
| WO 2015/020035 A1 | 12 February 2015 | US 2016/0183137 A1 paragraphs [0072]-[0073], [0081], [0089] | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2023019066 A